# EUROPEAN PATENT SPECIFICATION

(11) **EP 4 081 473 B1**
(45) Date of publication and mention of the grant of the patent: **06.03.2024**
(21) Application number: 20841768.3
(22) Date of filing: 18.12.2020
(51) Int. Cl.: B65H 21/00, B29C 44/32, E04C 2/292, F16B 5/00

(54) **SPLICING MASCHINE**
SPLEISSMASCHINE
COLLEUSE

(30) Priority: 23.12.2019 IT 201900025342
(43) Date of publication of application: 02.11.2022
(73) Proprietor: Robor SRL, 31055 Quinto di Treviso (TV) (IT)
(72) Inventor: BORSATO, Rogerio, 31055 Quinto di Treviso (TV) (IT); BORSATO, Simone, 31055 Quinto di Treviso (TV) (IT)
(74) Representative: Citron, Massimiliano
(86) International application number: PCT/IB2020/062171
(87) International publication number: WO 2021/130631

(56) References cited:
- EP-A2- 1 371 483
- WO-A1-2010/029587
- GB-A- 2 325 640

## Description

The invention relates primarily to a splicing machine.

Plants are known to produce panels consisting of two outer sheet metals and an inner layer of insulation material, see e.g. WO 2010/029587. Although the production lines allow manufacturing very large panels (up to 25 m in length), often the area to be covered is so large that the panels have to form a tessellation. To ensure continuity of coverage between a panel and the adjacent one, one of the two sheets protrudes from the panel by a certain length, and this overhang is used to overlap the adjacent panel. See e.g. EP1371483 for general information. In order to make the panel with overhanging sheet metal and maximally minimize waste, two adjacent cut ends of sheet metal are overlapped in line and a tape is laid over them to join them. Then, in a press, polyurethane foaming or gluing with insulating materials takes place between two continuous foils of sheet metal, one continuous and one with the joined sheets, and finally the sheet metals are cut and separated by tearing the tape. Thus, by separating the previously spliced ends, a panel end with protruding sheet metal and a panel end with sheet metal flush with the inner insulating layer, are obtained.

In order to perform the above operations, the line comprises a splicing machine for two ends of sheet metal and for laying the tape. A shearing station cuts portions of sheet metal that the downstream splicing station receives to splice them at two adjacent ends.

A typical splicing machine can be seen in Figs. 6a÷6c of EP1371483.

It has the disadvantage of being very bulky and expensive. In particular, the air suction system for attaching the tape to the corrugated punch develops on the upper frame of the machine, limiting its vertical compactness. In addition, the air is conveyed to the punch from the top by means of a complicated and cumbersome network of flexible hoses, because it is necessary to draw the tape onto the punch not all at once but sequentially, one portion at a time. Otherwise the tape e.g. cannot lie evenly on the corrugated surface of a fretted panel.

Proposing an alternative splicing machine is the primary object of the invention, which is defined in the appended claims, wherein the dependent claims define advantageous variants.

A splicing machine is proposed, inserted/insertable in line of a plant for insulating panels of the type having two external sheet metals obtained from a continuous foil of metal sheet and an insulating layer between them, where in particular the panels have a part of protruding sheet metal which can be overlapped over another finished panel or are abutted against each other (without overlapping),
the splicing machine being able to splice two ends of sheet metals with a deposited tape and comprising
   - a punch having a supporting surface for the ends of sheet metal to be joined,
   - a manifold directly coupled to the punch and comprising an internal cavity which
      extends - in use - horizontally along a longitudinal axis and
      at one end comprises a connection to an air passage,
   - a plurality of valve members placed within the cavity in a row along the axis, each valve member being configured to create or eliminate an airtight partition of the internal cavity, so as to respectively prevent or allow a flow of suctioned air going from the cavity to the passage,
   - a tape dispenser for depositing a splicing tape on the support surface,
the punch comprising air passage holes on the supporting surface which are connected with the airtight partitions of the internal cavity obtainable through the valve members.

By controlling the state of the valve members sequentially along the row starting with the one closest to the air passage, it is then possible to sequentially channel the air suction to the punch holes, so that the holes closest to the air passage suck air first, and then progressively the ones farthest away.

Through the suction of air entering into the punch holes, the tape is not only drawn onto the punch but is drawn one portion at a time, i.e. the portion near the air-sucking holes. Therefore, each sucked portion of tape has time to adhere well to the punch.

This system is advantageous especially if the punch has corrugations, because the tape must adhere well over each valley between two corrugations, but after it has adhered it is no longer possible to move it.

Preferably, the sequential control of the valve members takes place via an electronic processor.

According to a preferred embodiment, the plurality of valve members are members mounted within the cavity in a movable manner and in a row along the axis, each member being configured to create or eliminate by its own movement an airtight partition of the internal cavity, so as to respectively prevent or allow a flow of sucked air from the cavity towards the passage, the punch comprising air passage holes on the supporting surface which are connected with the airtight partitions of the internal cavity obtainable by displacement of the movable members.

Then, by moving the movable members sequentially along the row starting from the one closest to the air passage, it is then possible to sequentially channel the air suction into the punch holes, so that the holes closer to the air passage suck first, and then gradually those further away.

According to a preferred embodiment, said movable members are configured to move between two positions: one in which by their own volume they physically stop up the cross-section of the cavity, and one in which they leave open a passage inside the cavity.

According to a preferred simple embodiment, said movable members are flat members rotatably mounted within the cavity, e.g. as a kind of butterfly valve. The rotation axis of said members may be, for example, vertical or horizontal (in use) and/or orthogonal to the axis of the cavity. In particular, the machine comprises an actuator for moving each movable member, such as e.g. an electric or pneumatic rotary motor.

Or said members may be flat members mounted translatable inside the cavity, e.g. as a kind of guillotine valve.

According to a preferred embodiment, the machine comprises means or an actuator for moving or actuating one or each valve member independently of one another.

According to a preferred embodiment, the supporting surface of the punch has a corrugated profile, in order to produce fretted panels. In particular, the corrugated profile is composed of a series of wedges in relief from a flat surface, where one or each wedge is comprised in a block that can be permanently connected or disconnected to/from the punch. Thus wedges can be removed or added to vary the wavy profile. Even more particularly, the wedges and the supporting surface are connectable by means of interlock and/or a male/female coupling and/or a prismatic pair and/or a dovetail coupling.

According to a preferred simple embodiment, the manifold is a substantially parallelepipedal box-shaped structure and its internal cavity is substantially parallelepipedal in shape.

According to a preferred embodiment, the punch is linearly movably mounted on a platform which is vertically liftable with respect to a base to cooperate with a fixed counter-punch which is raised with respect to the base and is placed between the base and the punch. In this way, the vertical dimension of the machine is reduced.

According to a preferred embodiment, the tape dispenser comprises a prehensile member for gripping a strip of tape, the prehensile member being mounted to be movable linearly and parallel to the axis of the cavity. In particular, the prehensile member is movably mounted so as to translate between the punch when raised and the fixed counter-punch.

In particular, the prehensile member comprises a clamp made of anti-friction material, to facilitate the detachment of the tape.

More specifically, the clamp comprises two jaws that are toothed and configured to clamp the tape only with the tips of one or more teeth. Thus, the contact area with the tape is limited and the detachment between the tape and the clamp is easier (the tape is often adhesive).

According to a preferred embodiment, the machine comprises a tape cutting device for cutting a strip of tape deposited on top of the punch. In particular, the cutting device comprises a rotating cutting disc whose rotation axis is parallel to the translation axis of the prehensile member and is horizontally movable in a direction orthogonal to a vertical plane containing the translation axis of the prehensile member.

According to a preferred embodiment, the prehensile member and/or the cutting device are mounted on said liftable platform.

Note that
the machine may also splice flat sheet metals or other material; and/or
the machine is capable of joining two ends of sheet metal with a deposited tape or without it, and/or
the machine is capable of joining two ends of sheet metals while working in line within a plant for insulating panels of the type having two outer sheet metals made from a continuous metal foil and an insulating layer between them (e.g. rock wool or polyurethane foam), and/or
the junction created by the machine between the end of a sheet metal and the end of a continuous metal foil is made by means of an overlap, which may be made by placing the end of the sheet metal under the end of the continuous foil or by placing the end of the sheet metal over the end of the continuous foil, or they are abutted against each other without overlapping;
said base may be mounted on linear guides to linearly translate the whole machine with respect to the line of the plant.

Another aspect of the invention is a system comprising in-line the above machine. For example the line comprises a splicing machine for joining two ends of sheet metal and depositing some tape, and a shearing station for cutting portions of sheet metal that the downstream splicing machine receives for splicing them at two adjacent ends.

In general the machine may be inserted in plants for the production of panels formed by two external sheets and an internal layer of insulating material, such as WO 2010/029587 and/or as described in the introduction to this text.

The advantages of the invention will be clearer from the following description of a preferred embodiment of a splicing machine, reference being made to the attached drawing in which
- Fig. 1 shows a three-dimensional view of a machine according to the invention;
- Fig. 2 shows a side view of the machine in Fig. 1;

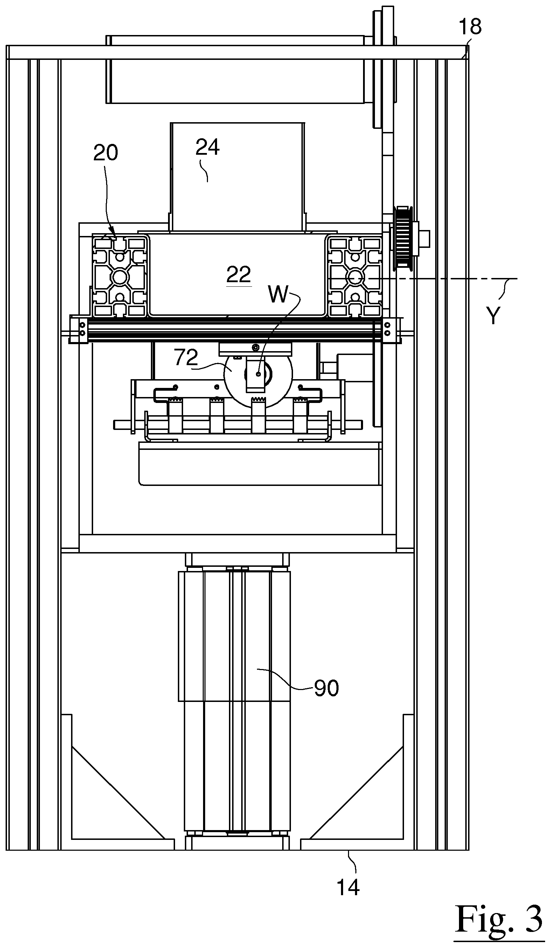

- Fig. 3 shows an enlarged view of a detail of the machine in Fig. 1;
- Fig. 4 shows a side view of the machine in Fig. 1.

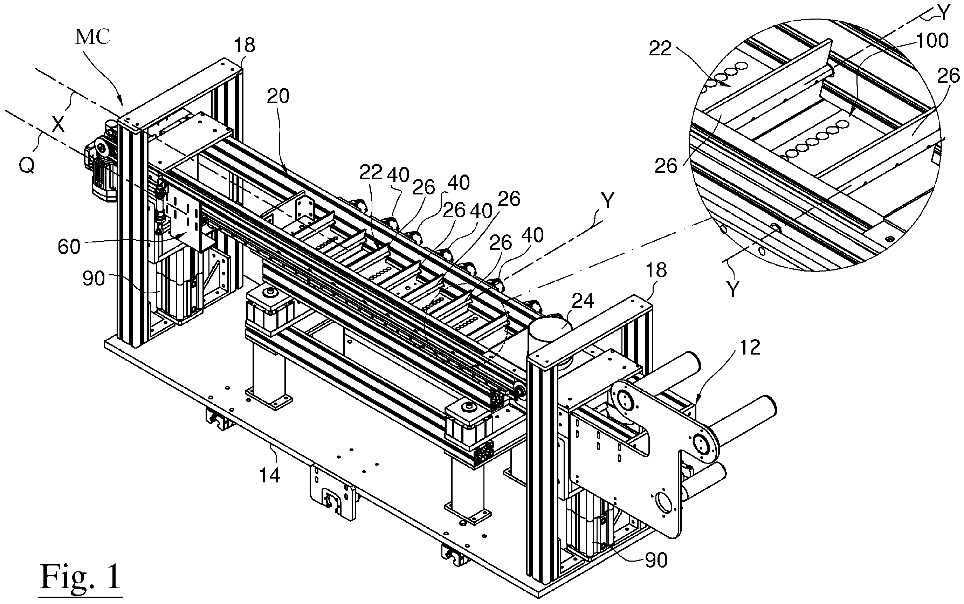

A splicing machine MC comprises a punch 10 having a supporting surface S for the ends of sheet metal to be spliced (not shown). The punch 10 is attached under an air manifold 20 in the form of a substantially parallelepiped, box-like structure with a substantially parallelepiped hermetically sealed internal cavity 22 (Fig. 1 shows the machine without a cover to highlight the interior of the cavity 22).

The punch 10 and the manifold 20 are mounted linearly movable on a platform 12 that can be raised vertically on side columns 18, via actuators 90, relative to a base 14 from which the side columns 18 raise. Thus, the punch 10 can cooperate with a fixed counter-punch 16 that is raised relative to the base 14 and is located between the base 14 and the punch 10.

The internal cavity 22 extends horizontally along a longitudinal axis X and at one end comprises an air passage 24.

A plurality of flat members 26 are rotatably mounted inside the cavity 22 having a rotation axis Y which is (in use) horizontal and orthogonal to the X axis of the cavity 22. In particular, the machine comprises an actuator for moving each member 26 independently of one another, such as an array of electric rotary motors 40.

Each member 26 may, by rotating, create or eliminate an airtight partition of the cavity 22. That is, each member 26 can block the exit toward the passage 24 of an airflow arriving from or into the cavity 22 on the opposite side of that member 26 with respect of the passage 24. E.g. in Fig. 1, each member 26 can block the exit toward the passage 24 of an airflow arriving from its left side.

In turn, the punch 10 comprises air passage holes on the supporting surface S that are connected to the airtight partitions of the inner cavity 22 obtainable by means of the members 26. In Fig. 1, ducts 100 can be seen at the bottom of the cavity 22 to transport the air from the supporting surface S to the cavity 22.

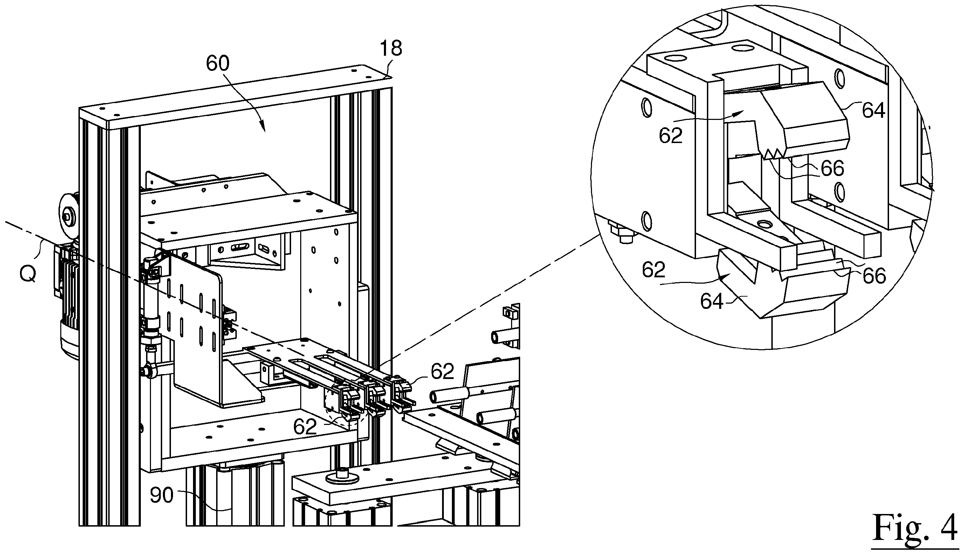

The machine MC also comprises on the platform 12:
a tape dispenser 60 (fig. 4) for spreading a splicing tape (not shown) over the supporting surface S, and
a cutter device 70 for cutting a strip of tape laid by the dispenser 60.

The dispenser 60 is on the opposite side of the cutting device 70 with respect of the cavity 22.

The dispenser 60 comprises one or more clamps 62 for gripping a strip of tape, and is mounted linearly movable and movable parallel to the X-axis (along a Q axis), so as to translate between the punch 10 when raised and the fixed counter-punch 16 for suspending a strip of tape near the punch 10. Preferably, the one or more clamps 62 are mounted on a movable carriage that is installed on the platform 12 to slide back and forth linearly and parallel to the X axis (along the Q axis).

Each clamp 62 is preferably made of anti-friction material.

Each clamp 62 preferably comprises two toothed jaws 64 configured to clamp the tape only with the tips of one or more teeth 66.

The device 70 comprises a rotating cutting disc 72, whose rotational axis W is parallel to the axis X, which is horizontally movable parallel to the Y axes.

### OPERATION

After two sheet metals arrive between the punch 10 and the fixed punch 16, the clamp 62 grabs the tape near a column 18, translates along Q to the other column 18, and spreads the tape near the punch 10.

By controlling the motors 42 in sequence, the cavity 22 is gradually "opened" to the flow of air entering from the holes into the punch 10 and coming out of the passage 24. The control sequence envisages that the motor 42 closest to the air passage 24 rotates first, to move the associated member 26 and allow a flow of air from the holes of the punch 10 towards the passage 24. Then the motor 42 next to the previous one is activated, and so on up to the last one. It is then possible to sequentially channel air suction into the holes of the punch 10 starting from the holes next to the passage 24 up to the holes at the opposite end.

As a result, the tape adheres tightly one piece at a time on the punch 10.

Then the disc 72 is activated, which upon translating crosses the width of the tape and detaches it from a roll (not shown).

Then by the actuators 90 the platform 12 is lowered to press the punch 10 against the fixed counter punch 16 and splice the sheet metals.

Once the platform 12 is raised again, the spliced sheet metals proceed down the line, and the cycle begins again for a new junction.

According to a preferred embodiment, the supporting surface S of the punch 10 has a corrugated profile, to produce fretted panels.

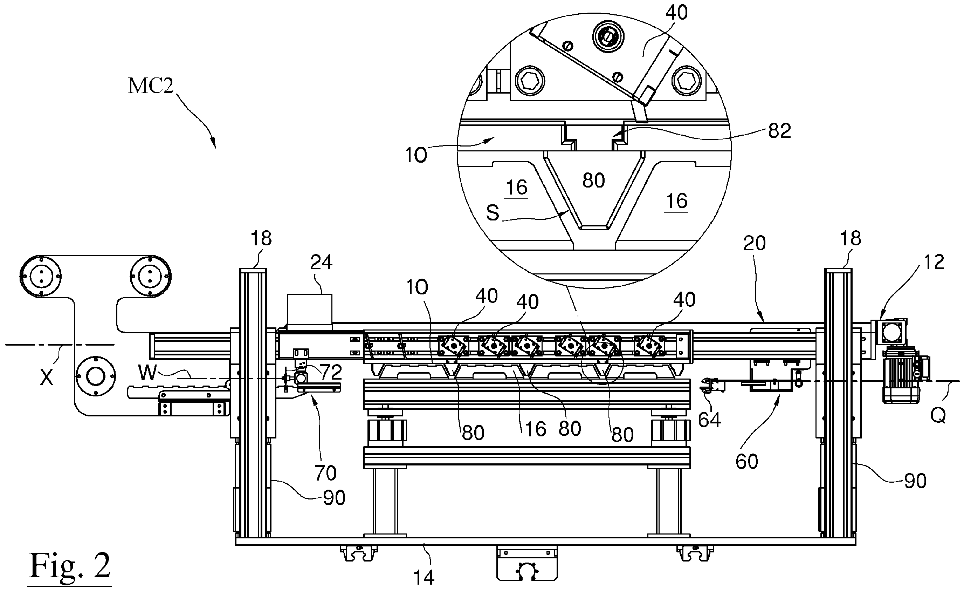

Said corrugated profile (Fig. 2) is formed of a series of wedges 80 raised from a flat surface. A or each wedge 80 is comprised in a block that can be permanently connected or disconnected to/from the punch 10 via a bayonet coupling 82 (other types of couplings are possible, however). Thus, the wedges 80 can be removed or added to vary the corrugated profile by simply slipping them off the platform 12 parallel to a Y axis.

The machine MC may be integrated in the line of a continuous-cycle plant.

For example, the base 14 is mountable on linear guides to linearly translate the whole machine MC with respect to the line.

## Claims

1. Splicing machine (MC) inserted/insertable in line of a plant for making insulating panels of the type having two external sheet metals obtained from a sheet of continuous metal foil and an insulating layer therebetween,
wherein the panels have a protruding sheet metal portion which can be overlapped over another finished panel or are abutted against each other without overlap,
the splicing machine being able to join two ends of sheet metals with a deposited tape and comprising:
- a punch (10) having a supporting surface (S) for the ends of sheet metal to be spliced,
- a manifold (20) directly coupled to the punch (10) and comprising an internal cavity (22) which
extends - in use - horizontally along a longitudinal axis (X) and
at one end comprises a connection to an air passage (24),
- a plurality of valve members (26) placed inside the cavity (22) in a row along the axis (X), each valve member (26) being configured to create or eliminate an airtight partition of the internal cavity (22), so as to respectively prevent or allow a flow of air sucked from the cavity toward the passage (24),
- a tape dispenser (60) for laying a splicing tape on the supporting surface;
wherein the punch (10) comprises, on the support surface (S), air-passage holes which are connected with the airtight partitions of the internal cavity (22) obtainable through the valve members (26).

2. Machine according to claim 1, wherein the plurality of valve members (26) are members mounted inside the cavity (22) in a movable manner and in a row along the axis (X), each valve member (26) being configured to create or eliminate by its own movement an airtight partition of the internal cavity (22).

3. Machine according to claim 2, wherein said movable valve members (26) are configured to move between two positions: one in which they physically stop up the cross-section of the cavity (22), and one in which they leave an open passage in the cavity (22).

4. Machine according to claim 2 or 3, wherein said movable valve members (26) are flat members rotatably mounted inside the cavity (22).

5. Machine according to claim 2 or 3, wherein said movable valve members are flat members mounted translatable inside the cavity (22).

6. Machine according to claim 4 or 5, comprising means or an actuator (40) for moving or operating one or each valve member (26) independently of one another.

7. Machine according to any one of the preceding claims, wherein the punch (10) supporting surface has a corrugated profile, to produce fretted panels,
the corrugated profile being composed of a series of wedges (80) in relief from a flat surface, wherein
one or each wedge (80) is comprised in a block which can be permanently connected or disconnected to/from the punch.

8. Machine according to any one of the preceding claims, wherein the punch (10) is mounted linearly on a platform (12) which can be raised vertically with respect to a base (14) to cooperate with a fixed counter-punch (16) which is raised with respect to the base (14) and is placed between the base (14) and the punch (10).

9. Machine according to any one of the preceding claims, wherein the tape dispenser comprises a prehensile member (62) for gripping a strip of tape, the prehensile member (62) being mounted to be movable linearly and parallel to the axis (X) of the cavity (22).

10. Machine according to claim 9, wherein the prehensile member comprises a clamp (62) made of anti-friction material.

11. Machine according to claim 10, wherein the clamp (62) comprises two toothed jaws (64) configured to clamp the tape only with the tips of one or more teeth (66).

12. Machine according to claim 9 or 10 or 11, comprising a tape cutting device for cutting a strip of tape deposited on top of the punch, the cutting device comprising a rotating cutting disc (72) whose rotation axis (W) is parallel to the translation axis (Q) of the prehensile member and is horizontally movable in a direction orthogonal to a vertical plane containing the translation axis of the prehensile member.

13. Machine according to claim 8 and 9, or according to claim 12, wherein the prehensile member (62) and/or the cutting device (72) are mounted on said liftable platform (12).

14. Machine according to any one of the preceding claims, wherein said manifold (20) is a substantially parallelepipedal box-shaped structure and its internal cavity is substantially parallelepipedal in shape.

15. Machine according to any one of the preceding claims, comprising an electronic processor for the sequential control of the valve members (26).

## Patentansprüche

1. Verbindungsmaschine (MC), eingefügt/einfügbar in die Linie einer Anlage zur Herstellung von Isolierplatten des Typs mit zwei Außenblechen, die aus einem Blatt kontinuierlicher Metallfolie und einer dazwischenliegenden Isolierschicht hergestellt sind,
wobei die Paneele einen überstehenden Blechabschnitt aufweisen, der über ein anderes fertiges Paneel überlappt werden kann oder ohne Überlappung aneinander gestoßen werden kann,
wobei die Verbindungsmaschine ist in der Lage, zwei Enden von Blechen mit einem aufgebrachten Band zu verbinden und umfasst:
- einen Stempel (10) mit einer Auflagefläche (S) für die zu verbindenden Blechenden,
- einen Verteiler (20), der direkt mit dem Stempel (10) verbunden ist und einen inneren Hohlraum (22) umfasst, der
erstreckt sich - im Gebrauch - horizontal entlang einer Längsachse (X) und
an einem Ende einen Anschluss an einen Luftkanal (24) aufweist,
- eine Vielzahl von Ventilelementen (26), die im Inneren des Hohlraums (22) in einer Reihe entlang der Achse (X) angeordnet sind, wobei jedes Ventilelement (26) so konfiguriert ist, dass es eine luftdichte Unterteilung des inneren Hohlraums (22) erzeugt oder beseitigt um einen Luftstrom, der aus dem Hohlraum in Richtung des Durchgangs (24) angesaugt wird, zu verhindern bzw. zu ermöglichen,
- einen Bandspender (60) zum Auflegen eines Spleißbandes auf die Auflagefläche;
wobei der Stempel (10) auf der Auflagefläche (S) Luftdurchlasslöcher aufweist, die mit den durch die Ventilelemente (26) erreichbaren luftdichten Trennwänden des Innenhohlraums (22) verbunden sind.

2. Maschine nach Anspruch 1, wobei die mehreren Ventilelemente (26) Elemente sind, die beweglich und in einer Reihe entlang der Achse (X) im Hohlraum (22) montiert sind, wobei jedes Ventilelement (26) dazu konfiguriert ist durch seine eigene Bewegung eine luftdichte Abtrennung des Innenhohlraums (22) erzeugen oder beseitigen.

3. Maschine nach Anspruch 2, wobei die beweglichen Ventilelemente (26) so konfiguriert sind, dass sie sich zwischen zwei Positionen bewegen können: einer, in der sie den Querschnitt des Hohlraums (22) physisch verschließen, und einer, in der sie eine Öffnung freilassen Durchgang im Hohlraum (22).

4. Maschine nach Anspruch 2 oder 3, wobei die beweglichen Ventilelemente (26) flache Elemente sind, die drehbar im Hohlraum (22) montiert sind.

5. Maschine nach Anspruch 2 oder 3, wobei die beweglichen Ventilelemente flache Elemente sind, die verschiebbar im Hohlraum (22) montiert sind.

6. Maschine nach Anspruch 4 oder 5, umfassend Mittel oder einen Aktuator (40) zum Bewegen oder Betätigen eines oder jedes Ventilelements (26) unabhängig voneinander.

7. Maschine nach einem der vorhergehenden Ansprüche, wobei die Auflagefläche des Stempels (10) ein gewelltes Profil aufweist, um geriffelte Platten herzustellen.
wobei das gewellte Profil aus einer Reihe von Keilen (80) besteht, die von einer flachen Oberfläche abheben, wobei
einer oder jeder Keil (80) ist in einem Block enthalten, der dauerhaft mit dem Stempel verbunden oder davon getrennt werden kann.

8. Maschine nach einem der vorhergehenden Ansprüche, wobei der Stempel (10) linear auf einer Plattform (12) montiert ist, die vertikal in Bezug auf eine Basis (14) angehoben werden kann, um mit einem festen Gegenstempel (16) zusammenzuwirken, der gegenüber der Basis (14) angehoben ist und zwischen der Basis (14) und dem Stempel platziert wird (10).

9. Maschine nach einem der vorhergehenden Ansprüche, wobei der Bandspender ein Greifelement (62) zum Ergreifen eines Bandstreifens umfasst, wobei das Greifelement (62) linear und parallel zur Achse (X) beweglich montiert ist. des Hohlraums (22).

10. Maschine nach Anspruch 9, wobei das Greifelement eine Klemme (62) aus reibungshemmendem Material umfasst.

11. Maschine nach Anspruch 10, wobei die Klemme (62) zwei gezahnte Backen (64) umfasst, die so konfiguriert sind, dass sie das Band nur mit den Spitzen eines oder mehrerer Zähne (66) festklemmen.

12. Maschine nach Anspruch 9 oder 10 oder 11, umfassend eine Bandschneidevorrichtung zum Schneiden eines auf der Oberseite des Stempels abgelegten Bandstreifens, wobei die Schneidvorrichtung eine rotierende Schneidscheibe (72) umfasst, deren Rotationsachse (W) parallel zu ist die Translationsachse (Q) des Greifelements und ist horizontal in einer Richtung orthogonal zu einer vertikalen Ebene beweglich, die die Translationsachse des Greifelements enthält.

13. Maschine nach Anspruch 8 und 9 oder nach Anspruch 12, wobei das Greifelement (62) und/oder die Schneidvorrichtung (72) auf der anhebbaren Plattform (12) montiert sind.

14. Maschine nach einem der vorhergehenden Ansprüche, wobei der Verteiler (20) eine im Wesentlichen quaderförmige kastenförmige Struktur ist und sein innerer Hohlraum im Wesentlichen quaderförmige Form hat.

15. Maschine nach einem der vorhergehenden Ansprüche, umfassend einen elektronischen Prozessor zur sequentiellen Steuerung der Ventilelemente (26).

## Revendications

1. Machine de raccordement (MC) insérée/insérable en ligne d'une installation de fabrication de panneaux isolants du type comportant deux tôles externes obtenues à partir d'une feuille de feuille métallique continue et d'une couche isolante entre elles ,
dans lequel les panneaux ont une partie en tôle saillante qui peut se chevaucher sur un autre panneau fini ou qui sont en butée l'un contre l'autre sans chevauchement,
la machine de raccordement étant apte à joindre deux extrémités de tôles avec un ruban déposé et comprenant :
- un poinçon (10) présentant une surface d'appui (S) pour les extrémités de tôle à raccorder,
- un collecteur (20) directement couplé au poinçon (10) et comprenant une cavité interne (22) qui
s'étend - en utilisation - horizontalement le long d'un axe longitudinal (X) et
à une extrémité comprend une connexion à un passage d'air (24),
- une pluralité d'éléments de valve (26) placés à l'intérieur de la cavité (22) en rangée le long de l'axe (X), chaque élément de valve (26) étant configuré pour créer ou supprimer une cloison étanche à l'air de la cavité interne (22), de sorte de manière à respectivement empêcher ou autoriser un flux d'air aspiré depuis la cavité vers le passage (24),
- un distributeur de ruban adhésif (60) pour déposer un ruban de jonction sur la surface de support ;
dans lequel le poinçon (10) comprend, sur la surface de support (S), des trous de passage d'air qui sont reliés aux cloisons étanches à l'air de la cavité interne (22) pouvant être obtenues à travers les éléments de valve (26).

2. Machine selon la revendication 1, dans laquelle la pluralité d'éléments de valve (26) sont des éléments montés à l'intérieur de la cavité (22) de manière mobile et en rangée le long de l'axe (X), chaque élément de valve (26) étant configuré pour créer ou supprimer par son propre mouvement une cloison étanche à l'air de la cavité interne (22).

3. Machine selon la revendication 2, dans laquelle lesdits éléments de valve mobiles (26) sont configurés pour se déplacer entre deux positions: une dans laquelle ils bouchent physiquement la section transversale de la cavité (22), et une dans laquelle ils laissent un ouvert passage dans la cavité (22).

4. Machine selon la revendication 2 ou 3, dans laquelle lesdits éléments de valve mobiles (26) sont des éléments plats montés rotatifs à l'intérieur de la cavité (22).

5. Machine selon la revendication 2 ou 3, dans laquelle lesdits éléments de valve mobiles sont des éléments plats montés mobiles en translation à l'intérieur de la cavité (22).

6. Machine selon la revendication 4 ou 5, comprenant des moyens ou un actionneur (40) pour déplacer ou actionner un ou chaque élément de valve (26) indépendamment l'un de l'autre.

7. Machine selon l'une quelconque des revendications précédentes, dans laquelle la surface d'appui du poinçon (10) présente un profil ondulé, pour réaliser des panneaux frettés,
le profilé ondulé étant composé d'une série de coins (80) en relief sur une surface plane, dans lequel
une ou chaque coin (80) est comprise dans un bloc qui peut être connecté ou déconnecté en permanence au/du poinçon.

8. Machine selon l'une quelconque des revendications précédentes, dans laquelle le poinçon (10) est monté linéairement sur une plateforme (12) relevable verticalement par rapport à un socle (14) pour coopérer avec un contre-poinçon fixe (16) qui est surélevé par rapport au socle (14) et est placé entre le socle (14) et le poinçon (10).

9. Machine selon l'une quelconque des revendications précédentes, dans laquelle le distributeur de ruban comprend un organe de préhension (62) pour saisir une bande de ruban, l'organe de préhension (62) étant monté mobile linéairement et parallèlement à l'axe (X) de la cavité (22).

10. Machine selon la revendication 9, dans laquelle l'organe de préhension comprend une pince (62) en matériau anti-friction.

11. Machine selon la revendication 10, dans laquelle la pince (62) comprend deux mâchoires dentées (64) configurées pour serrer le ruban uniquement avec les pointes d'une ou plusieurs dents (66).

12. Machine selon la revendication 9 ou 10 ou 11, comprenant un dispositif de coupe de ruban pour couper une bande de ruban déposée au dessus du poinçon, le dispositif de coupe comprenant un disque de coupe rotatif (72) dont l'axe de rotation (W) est parallèle à l'axe de translation (Q) de l'élément préhensile et est mobile horizontalement dans une direction orthogonale à un plan vertical contenant l'axe de translation de l'élément préhensile.

13. Machine selon les revendications 8 et 9, ou selon la revendication 12, dans laquelle l'organe de préhension (62) et/ou le dispositif de coupe (72) sont montés sur ladite plateforme relevable (12).

14. Machine selon l'une quelconque des revendications précédentes, dans laquelle ledit collecteur (20) est une structure en forme de caisson sensiblement parallélépipédique et sa cavité interne est de forme sensiblement parallélépipédique.

15. Machine selon l'une quelconque des revendications précédentes, comprenant un processeur électronique pour la commande séquentielle d'éléments de valve (26).
